# EUROPEAN PATENT SPECIFICATION

(11) **EP 2 421 196 B1**
(45) Date of publication and mention of the grant of the patent: **25.10.2017**
(21) Application number: 10764081.5
(22) Date of filing: 09.04.2010
(51) Int. Cl.: H04M 17/00, H04M 15/00, H04M 15/02, H04Q 3/00, H04L 12/14, H04L 12/24

(54) **CHARGING METHOD AND SYSTEM FOR PREPAID SERVICE**
LADEVERFAHREN UND -SYSTEM FÜR EINEN VORAB BEZAHLTEN DIENST
PROCEDE DE FACTURATION ET SYSTEME POUR SERVICE PREPAYE

(30) Priority: 16.04.2009 CN 200910106823
(43) Date of publication of application: 22.02.2012
(73) Proprietor: ZTE Corporation, Shenzhen, Guangdong 518057 (CN)
(72) Inventor: QIAN, Cheng, Shenzhen Guangdong 518057 (CN); SHEN, Song, Shenzhen Guangdong 518057 (CN); ZHANG, Shanfeng, Shenzhen Guangdong 518057 (CN)
(74) Representative: Beier, Ralph
(86) International application number: PCT/CN2010/071646
(87) International publication number: WO 2010/118668

(56) References cited:
- EP-A1- 1 416 747
- EP-A1- 1 655 887
- EP-A2- 0 641 134
- EP-A2- 1 207 678
- CN-A- 1 581 827
- CN-A- 1 780 248
- CN-A- 101 217 384
- CN-A- 101 540 986
- US-A1- 2006 058 010
- GUTURU P ET AL: "Message Replication and Consumer Database Synchronization Algorithms and System for Highly Available High Performance Intelligent Networks", IEEE TRANSACTIONS ON CONSUMER ELECTRONICS, IEEE SERVICE CENTER, NEW YORK, NY, US, vol. 53, no. 2, 1 May 2007 (2007-05-01), pages 375-383, XP011186752, ISSN: 0098-3063, DOI: 10.1109/TCE.2007.381704

## Description

### TECHNICAL FIELD

The present invention relates to the field of the prepaid service, in particular to a charging method and system for a prepaid service.

### BACKGROUND

The traditional network-in-network service needs to develop the main service of the Prepaid Service (PPS) and the Virtual Private Network (VPN) service; and the existing mode for implementing the PPS network-in-network service is as follows: a PPS user can join a VPN; in the PPS calling flow, it is necessary to determine whether an outgoing call and an incoming call are the intra-network calls according to the interactions of the calling and the called to the VPN to control the charges of the user; and the user can enjoy the intra-network charge preference when dialling the number in a VPN group, and it is required to update group balance information in the VPN after this calling ends; in addition, during the intra-network calling, besides the update of the accumulated amount in the group, it is also necessary to modify a PPS account and deduct the amount from the account, so that it is required to develop an interaction execute interface between the PPS and the VPN and the VPN service.

EP1655887A1 discloses such a method for providing a Virtual Private Network (VPN) service. The method comprises the steps of: after receiving a call request from a user terminal, a Service Control Point(SCP) judging whether the user terminal has applied for a prepaid service at the same time, if so, initiating a VPN service logic, invoking a prepaid service logic by the VPN service logic, and deducting fee from a prepaid account corresponding to the user terminal while providing the VPN service to the user terminal.

However, the execute signalling interaction may fail or lose data, therefore it is possible to cause the failure of this calling flow; in addition, in the existing way, once joining the same group, the users have a consistent charging solution in the group, so it is impossible to cross multiple systems, deduct VPN functional charges flexibly, and give the VPN users certain free-use credits, and it is also impossible to adopt different charging solutions for a free credit or a charging credit.

### SUMMARY

In view of this, the present invention provides a charging method and system for a prepaid service, which can realize the flexible VPN charging in the prepaid service.

To solve the technical problem, the present invention adopts the following technical solutions.

The invention provides a charging method for a prepaid service, comprising:
A: a VPN charging management module presets different VPN package charging levels in the prepaid service, receives a call from a user terminal, and determines whether there is at least one VPN valid user in a calling terminal and a called terminal and which preset VPN package charging level the call corresponds to; and
B: a VPN charging module charges the calling terminal or the called terminal which is a VPN valid user for the call according to the VPN package charging level which the calling terminal or the called terminal enjoys, and ends this calling when the amount of the user terminal account is insufficient.

In step B of the charging method, the step of charging for the call according to the VPN package charging level to which the calling terminal or the called terminal enjoys specifically comprise:
determining whether the call corresponds to a preset free credit level, if so, accumulating the call charge to the free credit, otherwise, accumulating the call charge to the amount of the user terminal account according to the charging level corresponding to the call.

In the charging method, the step of determining whether there is at least one VPN valid user in the calling terminal or the called terminal may specifically comprise:
determining whether the number of the calling terminal or the called terminal is that of a VPN user;
determining whether a VPN function is activated for the calling terminal or the called terminal; and
if the number of the calling terminal or the called terminal is that of a VPN user and the VPN function is activated, the calling terminal or the called terminal is a VPN valid user.

The charging method may further comprise a process of applying for the activation of the VPN function before step A, the process may specifically comprise:
a VPN functional module receives an application of activating the VPN function from the user terminal, and determines whether the user terminal belongs to the VPN, if so, immediately activates the VPN function or delays the activation of the VPN function for the user terminal, otherwise, does not activate the VPN function for the user terminal.

The charging method may further comprise: if the number of the calling terminal or the called terminal is not that of a VPN user, or the VPN function is not activated, or the call does not correspond to the preset VPN package charging level, determining whether the calling terminal or the called terminal enjoys the prepaid charging level, and performing charging according to the prepaid charging level if the calling terminal or the called terminal enjoys the prepaid charging level.

The charging method may further comprise a VPN registration process before step A, the process may specifically comprise: the VPN functional module receives a VPN registration request from the user terminal and determines the VPN authority for the user terminal.

The present invention further discloses a charging system for a prepaid service, comprising:
a VPN charging management module arranged to preset different VPN package charging levels in the prepaid service, receive a call from a user terminal, and determine whether there is at least one VPN valid user in a calling terminal and a called terminal and determine which preset VPN package charging level the call corresponds to; and
a VPN charging module arranged to charge the calling terminal or the called terminal which is a VPN valid user for the calll according to the charging level which the calling terminal or called terminal enjoys, and ending the call when the amount of the user terminal account is insufficient.

In the charging system, the VPN charging management module may be further arranged to determine whether the number of the calling terminal or the called terminal is that of a VPN user, determine whether a VPN function is activated for the calling terminal or the called terminal, and determine that the calling terminal or the called terminal is a VPN valid user if the number of the calling terminal or the called terminal is that of the VPN user and the VPN function is activated.

In the charging system, the VPN charging module may be further arranged to accumulate the call charge to a free credit if the call corresponds to a preset free credit level and accumulate the call charge to the amount of the user terminal account if the call corresponds to a payment level.

The charging system may further comprise a VPN functional module arranged to receive an application of activating the VPN function from the user terminal, determine whether the user terminal belongs to the VPN, and immediately activate the VPN function or delay the activation of the VPN function for the user terminal if the user terminal belongs to the VPN; and
the VPN functional module may be further arranged to receive a VPN registration request from the user terminal and determine the VPN authority for the user terminal.

The system may further comprise a service control point synchronization module arranged to synchronize an operation of a service management point to each service control point.

Compared with the prior art, the present invention has the following advantages.
1. In the prior art, the PPS service and the VPN service are two independent services, and need to perform signalling interaction through an execute interface in a nested mode. While the present invention implements a method which supports a package VPN function based on the PPS service in a non-nested mode, i.e., the VPN function is a function affiliated to the PPS main service. By the method, the PPS function and the VPN function are realized in one service, thereby avoiding the development of two services, the interaction between the PPS service and the VPN service as well as the development of the execute interface. With the framework of the present invention, the VPN function is presented as a package of the PPS service; to determine whether a PPS user enjoys the VPN function, it is only necessary to determine whether the user belongs to a group and applies for the activation of a corresponding VPN package. When the user belongs to the group and applies for the activation of the VPN package function, it is necessary to determine whether this calling of the user is a calling in the group, if so, execute the VPN flow, otherwise, execute the PPS flow. The signalling interaction between the PPS and the VPN through the execute interface is not required, thereby avoiding the circumstance that the possible failure and data loss may cause the failure of calling flow.
2. The VPN charging management module presets different VPN package charging levels, determines whether the user terminal is a VPN valid user and whether this calling belongs to the preset VPN package charging level to realize the flexible charging of the VPN, flexibly deducts the VPN functional charge and gives a VPN user certain free-use credits through the settings of different VPN package levels, thereby being convenient to save charges and favourable for the service promotion of operators. In the present invention, users are not limited by groups and the users in the same group can pay different VPN functional charges because the users can apply for VPN packages after joining the group, and multiple VPN packages can be set in the service, so that the VPN functional charges are different according to the different VPN packages applied by the users. Indeed, according to different VPN packages, the charging has different free credits, different charging solutions corresponding to the free credits of respective VPN packages and different charging solutions corresponding to the charging levels.
3. The development costs of operators are saved without changing the existing service framework structures and development interfaces.

Furthermore, the present invention is also applicable to multiple systems by setting a Service Control Point (SCP) synchronization module. Herein, multiple systems refer to multiple SCP systems. The group information and user information of each SCP, when added, are synchronized to other SCPs in real time through a Service Management Point (SMP). Therefore the users in the same group can enjoy the VPN preference even distributed on different SCPs.

### BRIEF DESCRIPTION OF THE DRAWINGS

Fig. 1 shows a structure schematic diagram of a charging system in an embodiment of the present invention;
Fig. 2 shows a flowchart of a VPN group registration in an embodiment of the present invention;
Fig. 3 shows a flowchart of applying for activation of the VPN function in an embodiment of the present invention; and
Fig. 4 shows a schematic diagram of a charging flow in an embodiment of the present invention.

### DETAILED DESCRIPTION

The present invention is described below with reference to the drawings and in conjunction with the embodiments in detail.

Before the description, the English terms or abbreviations herein are described at first, as shown in Table 1.

**Table 1**

| English abbreviation | English full name |
|---|---|
| PPS | Prepaid Service |
| SCP | Service Control Point |
| GSM | Global System for Mobile Communication |
| VPN | Virtual Private Network |
| SMP | Service Management point |

The present invention provides a charging method and system for the VPN function which can cross multiple systems and be compatible with post-paid and prepaid services, without changing the existing PPS service framework structures and multiple development interfaces and services, so that the users can enjoy the functional preferences of both the VPN and PPS at the same time. Also, it is possible to flexibly formulate VPN monthly functional charges, and flexibly configure free intra-network and extra-network call durations or charge package which can be enjoyed by VPN users.

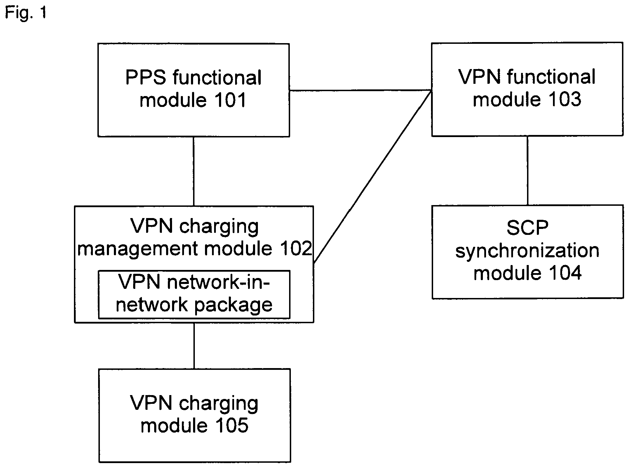

Fig. 1 exemplarily describes the charging system of the present invention, which mainly comprises the following components:
a PPS functional module 101, which is used for activating the PPS service and functions for a user to enable the user to enjoy the PPS preferential charge;
a VPN charging management module 102, which is mainly used for presetting different package charging levels of the VPN service, receiving a calling request from a user terminal, and determining whether there is at least one VPN valid user in a calling terminal and a called terminal and determining whether this calling belongs to the preset different package charging levels;
in the present invention, the different package charging levels of the VPN service are called VPN network-in-network packages; respective different VPN network-in-network packages can have different preferential items, VPN functional charges, credits of different levels and the corresponding charging solutions; in one embodiment of the present invention, it is stipulated that only the PPS users who apply to join a VPN group can apply for the corresponding packages;
a VPN charging module 105, which is used for charging a user according to the charging solution of the VPN network-in-network package level to which the user belongs, charging the calling terminal or the called terminal which is a VPN valid user for this calling according to the charging level to which the calling terminal or called terminal belongs, and ending this calling when the amount of the user terminal account is insufficient.

In order to cross multiple systems, the modification of any user group information of the users can be synchronized to different SCPs through a synchronization process, and after the group users are added and the information of the users is modified, both the added user information and modified user information are synchronized to each SCP through a platform synchronization process. All those are completed by the illustrated SCP synchronization module 104, which has the following functions:
the operation that a user joins a group or the VPN function becomes available will be written into a SCP database table for records; in the whole intelligent network system, any operation of the SMP will be synchronized to each SCP through the the synchronization process of the platform to ensure that any user in the SCP database can find the users in the group to which the user belongs when performing the voice service and short message service so as to realize the VPN preference. The data synchronization operation among multiple SMPs can ensure that the VPN group information crosses multiple intelligent network systems.

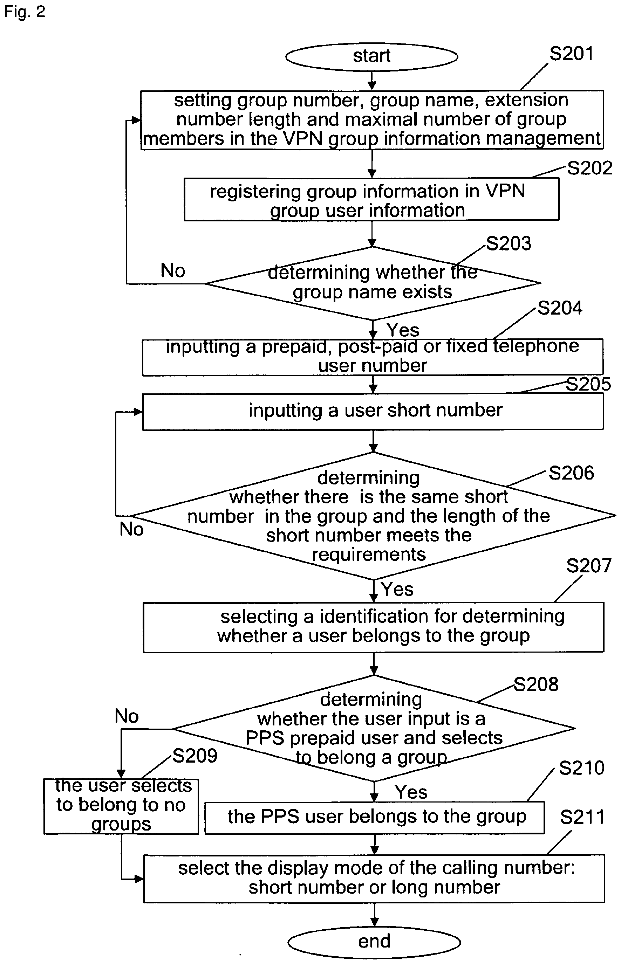

Fig. 2 exemplarily describes the process of a VPN group setting and a user registration in the present invention. Generally, one or more users groups can access the VPN network-in-network package. Herein, such user groups are called the VPN groups; in one VPN, there may be multiple VPN groups, so that the users in the VPN can be registered to one or more VPN groups.

Therefore, the VPN groups are set at first and the corresponding users are registered, these operations can be completed by the VPN functional module 103 illustrated in Fig. 1, the VPN functional module 103 can be used for setting the VPN groups and the related information; after the group information is set, the users can apply to join the groups to obtain the VPN functions; generally, the users with the VPN network-in-network package should be the VPN valid users.

As illustrated in Fig. 2, the processes of setting of the VPN groups and the user registration comprise the following steps.

Step S201: a corresponding group number, group name, limited extension number length and number of group users are set for a VPN group; and the added information is recorded in a group information table.

Step S202: after the group is set, a user can be registered to each VPN group. The user not only can apply to be registered to the VPN group by himself, but also can apply to register the numbers of friends and relatives to obtain packages for the numbers of the friends and relatives; and the numbers of the friends and relatives can be added after the packages for the numbers of the friends and relatives are applied. The VPN is a group to which the numbers of the friends and relatives are added, so that the numbers of the friends and relatives are added to a group rather than a single PPS user and the user only needs to apply to join the VPN group.

Step S203: only the group existing in the group information table can a user apply to join, and the user cannot join a group which is not in the group information table. The VPN functional module 103 processes the registration request from a user and determines the VPN authority for the user. The VPN authority of the user determines the identity of the user in each group, including joining right and belonging right. A user can join the preferences of multiple groups but can only belong to one group in which the user enjoys the inter-calling preferences among members in the network and will pay functional charges. Users with different authorities have different charging levels. Therefore, it is necessary to determine whether the name of the group which the user applies to join exists in this step, if so, execute step S204, otherwise, it is necessary to supplement required group information and return to step S201.

Step S204: any user in prepaid, post-paid and fixed telephone services can join the existing groups, and can join multiple existing groups, but the PPS repaid users can only belong to one group.

Step S205: in the VPN group, a user number can be in the form of a short number, and the users in the group can place a call through the short numbers by setting their extension numbers; and such short numbers are convenient to memorize.

Step S206: the length of the short number in the group is limited by the length of the extension number in the group information management; and the short number with out-of-limit length cannot be applied during the setting of the short numbers. In addition, the short number of a user cannot be the same as that of other users in the group because the user corresponding to the same short number cannot be determined when a user dials the same short number, thus the short number is limited when being added. Therefore, it is necessary to determine whether there is the same short number in the group and whether the length of the short number meets the requirement in this step, if there is no same short number in the group and the length of the short number meets the requirement, execute step S207, otherwise, return to step S205.

Step S207: as described above, a user can be registered to the VPN group with two identities: one is the identity of belonging to the group, the user will pay VPN functional charges, and can enjoy the free inter-calling or group preferential charges when calling other members in the group, i.e., a user belonging to a group enjoys the preference when calling any other users in the group; and the other is the identity of not belonging to the group, the user will not pay VPN functional charges, neither enjoy the free inter-calling or group preferential charges when calling other members in the group; but when the user with the identity of not belonging to a group is called by a calling user belonging to the group, the calling user enjoy the preferences. A user identification identifier can be set for a user for determining whether the user belongs to a VPN group.

The summary of the belonging circumstances of the calling terminal and the called terminal comprises:
when the calling terminal and the called terminal are in the same group and also belong to the group, both of them will enjoy the preferences;
when the calling terminal and the called terminal are in the same group, the calling terminal belongs to the group while the called does not belong to the group, only the calling terminal will enjoy the preferences while the called terminal will not enjoy the preferences; and
when the calling terminal and the called terminal are in the same group, the calling terminal does not belong to the group while the called terminal belongs to the group, only the called terminal will enjoy the preferences while the calling terminal will not enjoy the preferences;
for example, if the ZTE corporation is taken as a VPN group, the employees in the ZTE corporation belong to the group and enjoy inter-calling preferences; while a family member of the employee in the ZTE corporation may belong to a VPN group to which his/her company belong, and can join rather than belong to the VPN group of the ZTE corporation as a friend or relative. Under such a circumstance, the users belonging to the ZTE group enjoy the preferences when calling the family members joining but not belonging to the ZTE group; but the family members do not belong to the ZTE group, therefore the family members cannot enjoy the preferences. The calling and the called processes between a family member of the employee and a stranger do not enjoy the preferences according to the VPN charging levels and can only use the charging solution of the PPS service.

Steps S208-S211: it is necessary to determine whether the user is a PPS user in step S208 at first. If the user is a PPS prepaid user, the user can select to belong to a group in step S210; then a calling number display mode (short number or long number) is selected for the user in step S211, otherwise, the user only joins and does not belong to any group (step S209); and a calling number display mode is directly selected for the user (step S211). When a VPN user is a calling party, it is possible to display the short number as well as the long number of the user.

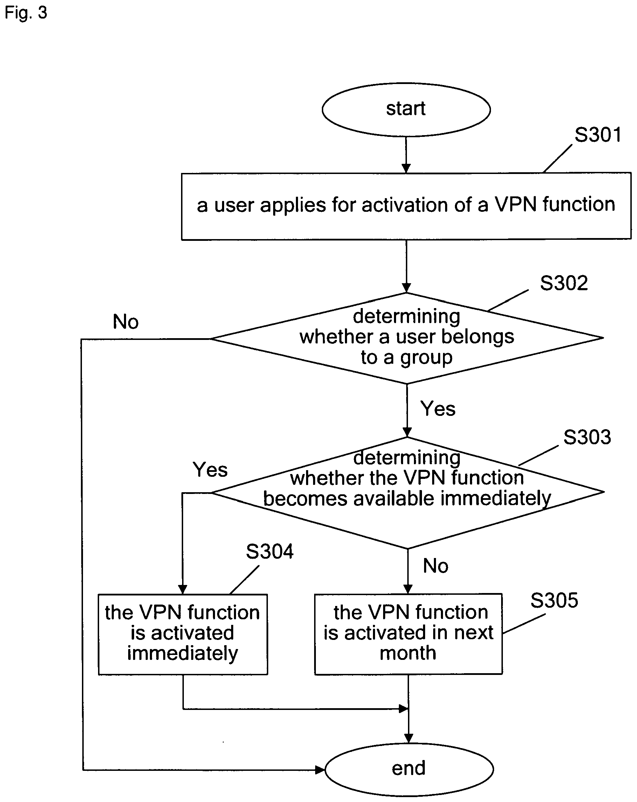

As illustrated in Fig. 3, the flow of applying for the activation of the VPN function for the user is as follows.

Step S301: the user needs to apply for the activation of the VPN function at first if he wants to have such a function which is not activated by default.

Step S302: not all users can apply for the activation of the VPN function, only the users belonging to a group can apply for the activation of the VPN function, and only PPS users can belong to a group while the users belonging to no groups cannot apply for activation of the VPN function. So it is necessary to determine whether the users applying for the activation of the VPN function belong to a group in this step, if so, execute step S303, otherwise, end the whole flow.

Step S303: the user can apply for the VPN function available immediately (i.e., immediately become available) or VPN function available in next month (i.e., delay the availability); some VPN functions are set to be charged monthly and some are set to be free from the functional charges, therefore, which VPN function the users will select is decided by themselves. In this way, if the VPN function available immediately is selected in the step, step S304 is executed, otherwise, step S305 is executed.

Step S304: the user selects the VPN function available immediately, and the users with the VPN functions activated enjoy the inter-calling preferences when calling the users in the group. Meanwhile, the VPN functional charges will be deducted immediately.

Step S305: the user selects the VPN function available in next month, and the user will not enjoy the preference immediately when calling the users in the group and can enjoy the VPN preference after the monthly functional charges are deducted in next month.

To sum up, generally, only when this calling belongs to the preset charging level can the valid user of the VPN enjoy the different charging levels for the VPN service which are preset by the VPN charging management module 102. It is possible to determine whether the calling terminal or the called terminal is the valid user of the VPN by the VPN functional module 103, the determining process comprises:
determining whether the number of the calling terminal or the called terminal is that of a VPN user;
determining whether the VPN function is activated for the calling terminal or the called terminal activates; and
when the number of the calling terminal or the called terminal is that of a VPN user and the VPN function is activated, the calling terminal or the called terminal is a valid user of the VPN.

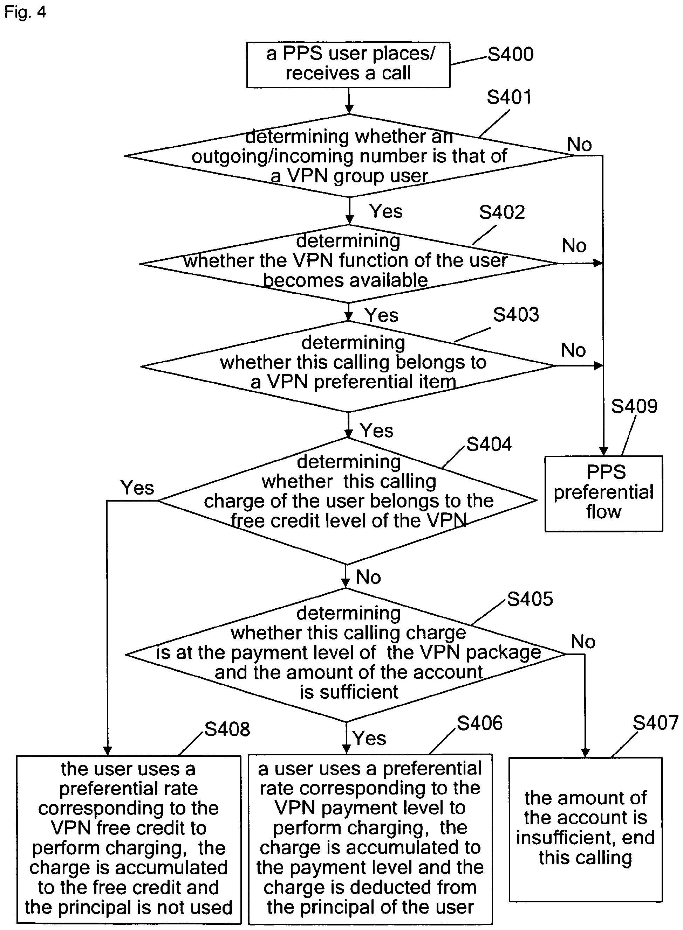

As illustrated in Fig. 4, the flow of the charging method in an embodiment of the present invention comprises the following steps.

Step S400: a PPS user places or receives a call. Herein, the user placing the call is named the calling terminal, while the user receiving the call is named the called terminal; the VPN charging management module 102 needs to determine whether the calling terminal and/or the called terminal is the valid user of the VPN after receiving a calling request from a user terminal and determine whether this calling belongs to the preset VPN network-in-network package according to the other number corresponding to the charging number in the calling.

Steps S401-S403: at first, it is limited that only a PPS user can enjoy PPS or VPN preference, and the user executes a PPS preferential flow or VPN preferential flow; by determining whether the user join a group when the user places/receives a call in the group, the user executes the VPN preferential flow no matter the short or long number of the other party in the calling is dialled, otherwise, executes the PPS preferential flow. The PPS preferential flow can be implemented by the PPS functional module 101 illustrated in Fig. 1, and the PPS functional module 101 is used for activating the PPS service and function for the users to enable the users to enjoy the PPS preferential charge.

As described above, only when this calling belongs to the preset VPN preferential item can only the valid users of the VPN perform the charging of the VPN charging level. The condition for determining the VPN charging level comprises that: determining group identities (determining whether outgoing/incoming number is that of the user in the VPN group) in step S401, determining whether the VPN function is activated for the user (determining whether the VPN function of the users becomes available) in step S402, and determining whether this calling belongs to the preset different charging levels (determining whether this calling belongs to the VPN preferential item) in step S403, when the three conditions are met, executing step S404, otherwise executing step S409 to execute the PPS preferential flow.

Step S404: after the VPN function of the users becomes available and this calling flow or short message flow meets the conditions of the VPN preferential item, the users can enjoy certain preference; the charging levels include a free credit level and a payment level; the free credit level is paid for by the free credits of the users, i.e., step S408 described below; the payment level is paid for by the amount of the user account, i.e., steps S405-S407 described below.

Steps S405-S407: when the users are at the payment level, (including the case that the users have no free credits or the free credit of the VPN package of the users is used up), the account principal of the user is needed for payment. If the principal of the user is sufficient for this calling, the preferential charging of the payment level is adopted for performing charging to deduct the amount from the principal account of the users; if the amount of the principal account of the users is insufficient for this calling, this calling is ended.

Step S408: the users can obtain certain free credit and can apply for VPN packages with different free credits. When the charges of the users are still within the free credit, the preferential charges corresponding to the free credit of the user is used for performing charging and the charge amount is accumulated to the used free credit; if the free credit of the users is used up, the next level of the free credit is used for performing charging.

Through the solution, the users of multiple intelligent network systems join a group, have corresponding short numbers and select display modes; the PPS users in the group apply for VPN packages and can enjoy the VPN package preference when calling the users in the group, thereby fulfilling the aim of being compatible with post-paid and prepaid services, deducting the VPN functional charges and enjoying the VPN and PPS preferential functions at the same time by modifying the numbers of friends and relatives and package functions. Also it is possible to flexibly formulate VPN monthly functional charge, flexibly configure free intra-network and extra-network call durations or charge package which can be enjoyed by VPN users.

The present invention realizes the VPN functions of crossing multiple systems and being compatible with post-paid and prepaid services, and the deduction of the VPN functional charges, enables the users to enjoy the VPN and PPS functional preferences at the same time and use different preferential charges according to different package levels when they enjoy the VPN function, reduces the development of the VPN service and interfaces and fulfils the aims of saving labour force and maintaining costs.

The above are the further detailed descriptions of the present invention with reference to specific preferred embodiments, and are only examples for easy understanding, so it should not be considered that the specific implementation of the present invention are only limited to these descriptions. Those skilled in the art may make various possible equivalent changes or replacements within the conception of the present invention, and such changes or replacements should fall within the protection scope of the present invention.

## Claims

1. A charging method for realizing Virtual Private Network VPN charging in a prepaid service, having a VPN function affiliated as a package to the prepaid service, **characterized in that**, the method comprises:
A: a VPN charging management module presetting different VPN package charging levels in the prepaid service, receiving a call from a user terminal (S400), and determining whether there is at least one VPN valid user in a calling terminal and a called terminal (S401,S402) and which preset VPN package charging level the call corresponds to (S403); and
B: a VPN charging module charging the calling terminal or the called terminal which is a VPN valid user for the call according to the VPN package charging level which the calling terminal or called terminal enjoys (S404,S405,S406,S408), and ending this calling if the amount of the user terminal account is insufficient (S407).

2. The method according to claim 1, wherein step B of charging for the call according to the VPN package charging level which the calling terminal or the called terminal enjoys specifically comprises:
determining whether the call corresponds to a preset free credit level (S404), if so, accumulating the call charge to the free credit (S408); otherwise, accumulating the call charge to the amount of the user terminal account according to the charging level corresponding to the call (S405,S406).

3. The method according to claim 1 or 2, wherein the step of determining whether there is at least one VPN valid user in the calling terminal or the called terminal comprises:
determining whether the number of the calling terminal or the called terminal is that of a VPN user and determining whether a VPN function is activated for the calling terminal or the called terminal (S401); and
if the number of the calling terminal or the called terminal is that of a VPN user and the VPN function is activated, the calling terminal or the called terminal is a VPN valid user (S402).

4. The method according to claim 3, further comprising: a process of applying for the activation of the VPN function before step A, the process specifically comprises:
a VPN functional module receives an application of activating the VPN function from the user terminal (S301), determines whether the user terminal belongs to the VPN (S302), if so, immediately activates the VPN function or delays the activation of the VPN function for the user terminal (S303,S304,S305), otherwise, does not activate the VPN function for the user terminal.

5. The method according to claim 3, further comprising: if the number of the calling terminal or the called terminal is not that of a VPN user (S401), or the VPN function is not activated (S402), or the call does not correspond to the preset VPN package charging level (S403), determining whether the calling terminal or the called terminal enjoys the prepaid charging level, and performing charging according to the prepaid charging level if the calling terminal or the called terminal enjoys the prepaid charging level (S409).

6. The charging method according to claim 1, further comprising a VPN registration process before step A, the process specifically comprises:
the VPN functional module receives a VPN registration request from the user terminal (S301) and determines the VPN authority for the user terminal (S302, S303, S304, S305).

7. A charging system for realizing Virtual Private Network VPN charging in a prepaid service, having a VPN function affiliated as a package to the prepaid service, **characterized in that**, the system comprises:
a VPN charging management module (102) arranged to preset different VPN package charging levels in the prepaid service, receive a call from a user terminal, and determine whether there is at least one VPN valid user in a calling terminal and a called terminal and determine which preset VPN package charging level the call corresponds to; and
a VPN charging module (105) arranged to charge the calling terminal or the called terminal which is a VPN valid user for the call according to the charging level which the calling terminal or called terminal enjoys, and ending the call when the amount of the user terminal account is insufficient.

8. The system according to claim 7, wherein the VPN charging management module (102) is further arranged to determine whether the number of the calling terminal or the called terminal is that of a VPN user, determine whether a VPN function is activated for the calling terminal or the called terminal, and determine that the calling terminal or the called terminal is a VPN valid user if the number of the calling terminal or the called terminal is that of the VPN user and the VPN function is activated.

9. The system according to claim 7, wherein the VPN charging module (105) is further arranged to accumulate the call charge to a free credit if the call corresponds to a preset free credit level and accumulate the call charge to the amount of the user terminal account if the call corresponds to a payment level.

10. The system according to claim 7, further comprising: a VPN functional module (103) arranged to receive an application of activating the VPN function from the user terminal, determine whether the user terminal belongs to the VPN, and immediately activate the VPN function or delay the activation of the VPN function for the user terminal if the user terminal belongs to the VPN;
the VPN functional module (103) is further arranged to receive a VPN registration request from the user terminal and determine the VPN authority for the user terminal.

11. The system according to claim 7, further comprising: a service control point synchronization module (104) arranged to synchronize an operation of a service management point to each service control point.

## Patentansprüche

1. Abrechnungsverfahren zur Umsetzung einer Abrechnung eines Virtual Private Networks (VPN) in einem vorab bezahlten Dienst, der eine VPN-Funktion in Form eines Pakets für den vorab bezahlten Dienst umfasst, **dadurch gekennzeichnet, dass** das Verfahren umfasst:
A: ein VPN-Abrechnungsmanagement-Modul, das verschiedene VPN-Paket-Tarife im vorab bezahlten Dienst vorgibt, einen Anruf von einem Nutzer-Endgerät erhält (S400) und ermittelt, ob mindestens ein gültiger VPN-Nutzer beim rufenden Endgerät und beim angerufenen Endgerät vorliegt (S401, S402), und welchem vorgegebenen VPN-Paket-Tarif der Anruf entspricht (S403); und
B: ein VPN-Abrechnungsmodul, das das anrufende Endgerät oder das angerufene Endgerät, welches einen gültigen VPN-Nutzer für den Anruf darstellt, gemäß des VPN-Paket-Tarifs des anrufenden oder angerufenen Endgeräts belastet (S404, S405, S406, S408), und den Anruf beendet, falls das Guthaben des Nutzerendgerätkontos nicht ausreicht (S407)

2. Verfahren gemäß Anspruch 1, wobei Schritt B des Abrechnens des Entgelts für den Anruf gemäß dem VPN-Paket-Tarif, welchen das anrufende Endgerät oder das angerufene Endgerät genießt, speziell umfasst:
Ermitteln, ob der Anruf einem vorgegebenen freien Guthabenkontingent (S404) angehört, falls ja, Anrechnen des Anrufentgelts auf das freie Guthabenkontingent (S408),
andernfalls, Anrechnen des Anrufentgelts auf das Guthaben des Nutzerendgerätkontos entsprechend dem Tarif dem der Anruf entspricht (S405, S406).

3. Verfahren gemäß Anspruch 1 oder 2, wobei der Schritt der Ermittlung, ob mindestens ein gültiger VPN-Nutzer beim rufenden Endgerät und beim angerufenen Endgerät vorliegt umfasst:
Ermitteln, ob die Nummer des anrufenden Endgeräts oder des angerufenen Endgeräts die eines VPN-Nutzers ist und
ermitteln, ob eine VPN-Funktion für das anrufende Endgerät oder das angerufene Endgerät aktiviert ist (S401); und
falls die Nummer des anrufenden Endgeräts oder des angerufenen Endgeräts, die eines VPN-Nutzers ist und die VPN-Funktion aktiviert ist, handelt es sich beim anrufenden Endgerät oder beim angerufenen Endgerät um einen gültigen VPN-Nutzer (S402).

4. Verfahren gemäß Anspruch 3, wobei dieses zusätzlich umfasst:
Einen Prozess zur Beantragung einer Aktivierung der VPN-Funktion vor Schritt A, wobei der Prozess speziell umfasst:
Ein VPN-Funktionsmodul erhält einen Antrag für die Aktivierung der VPN-Funktion von einem Nutzer-Endgerät (S301),
es ermittelt, ob das Nutzer-Endgerät zum VPN gehört (S302),
falls ja, aktiviert es sofort die VPN-Funktion oder verzögert die Aktivierung der VPN-Funktion für das Nutzer-Endgerät (S303, S304, S305)
andernfalls aktiviert es nicht die VPN-Funktion für das Nutzer-Endgerät.

5. Verfahren gemäß Anspruch 3, wobei dieses zusätzlich umfasst:
Falls die Nummer des anrufenden Endgeräts oder des angerufenen Endgeräts nicht die eines VPN-Nutzers ist (S401) oder die VPN Funktion nicht aktiviert ist (S402) oder der Anruf nicht dem vorgegebenen VPN-Paket Tarif entspricht (S403),
ermitteln, ob das anrufende Endgerät oder das angerufene Endgerät den vorab bezahlten Dienst-Tarif genießt und gemäß dem vorab bezahlten Tarif abzurechnen, falls das anrufende Endgerät oder das angerufene Endgerät den vorab bezahlten Dienst-Tarif genießt (S409).

6. Abrechnungsverfahren gemäß Anspruch 1, zusätzlich umfassend einen VPN-Registrierungsprozess vor Schritt A, wobei der Prozess speziell umfasst:
Das VPN-Registrierungsmodul erhält eine VPN-Registrierungs-Anfrage eines Nutzer-Endgeräts (S301) und ermittelt die VPN-Berechtigung des Nutzer-Endgeräts (S302, S303, S304, S305).

7. Abrechnungssystem zur Umsetzung einer Abrechnung eines Virtual Private Networks in einem vorab bezahlten Dienst, der eine VPN-Funktion in Form eines Pakets für den vorab bezahlten Dienst umfasst, **dadurch gekennzeichnet, dass** das System umfasst:
Ein VPN-Abrechnungsmanagement-Modul (102), das ausgelegt ist, verschiedene VPN-Paket-Tarife im vorab bezahlten Dienst vorzugeben, einen Anruf von einem Nutzer-Endgerät zu erhalten, zu ermitteln, ob mindestens ein gültiger VPN-Nutzer beim rufenden Endgerät und beim angerufenen Endgerät vorliegt und zu ermitteln, welchem vorgegebenen VPN-Paket-Tarif der Anruf entspricht; und
ein VPN-Abrechnungsmodul (105), das angeordnet ist, das anrufende Endgerät oder das angerufene Endgerät, welches einen gültigen VPN-Nutzer für den Anruf darstellt, gemäß des VPN-Paket-Tarifs des anrufenden oder angerufenen Endgeräts zu belasten und den Anruf zu beenden, falls das Guthaben des Nutzer-Endgerät-Kontos nicht ausreicht.

8. System gemäß Anspruch 7, wobei das VPN-Abrechnungsmanagement-Modul (102) zusätzlich angeordnet ist, zu ermitteln, ob die Nummer des anrufenden Endgeräts oder angerufenen Endgeräts die eines VPN-Nutzers ist, zu ermitteln, ob eine VPN-Funktion für das anrufende Endgerät oder das angerufene Endgerät aktiviert ist und zu bestimmen, dass das anrufende Endgerät oder das angerufene Endgerät ein gültiger VPN-Nutzer ist, falls die Nummer des anrufenden Endgeräts oder des angerufenen Endgeräts das eines VPN-Nutzers ist und die VPN-Funktion aktiviert ist.

9. System gemäß Anspruch 7, wobei das VPN-Abrechnungsmodul (105) zusätzlich angeordnet ist, das Anrufentgelt auf das freie Guthabenkontingent anzurechnen, falls der Anruf einem vorgegebenen freien Guthabenkontingent angehört und das Anrufentgelt auf das Guthaben des Nutzerendgerätkontos anzurechnen, falls der Anruf einem kostenpflichtigen Tarif angehört.

10. System gemäß Anspruch 7, wobei dieses zusätzlich umfasst:
Ein VPN-Funktionsmodul (103), das angeordnet ist, einen Antrag zur Aktivierung der VPN-Funktion vom Nutzer-Endgerät zu empfangen, zu ermitteln, ob das Nutzer-Endgerät zum VPN gehört und sofort die VPN-Funktion zu aktivieren oder die Aktivierung der VPN-Funktion für das Nutzer-Endgerät zu verzögern, falls das Nutzer-Endgerät zum VPN gehört;
Das VPN-Funktionsmodul (103) ist zudem angeordnet, einen VPN-Registrationsantrag eines Nutzer-Endgeräts zu empfangen und die VPN-Berechtigung des Nutzer-Endgeräts zu ermitteln.

11. System gemäß Anspruch 7, wobei dieses zusätzlich umfasst:
Ein Service-Kontrollpunkt-Synchronisationsmodul (104), das angeordnet ist, eine Transaktion eines Service-Managementpunkts zu jedem Service-Kontrollpunkt zu synchronisieren.

## Revendications

1. Procédé de facturation pour réaliser une facturation de réseau privé virtuel VPN dans un service prépayé, ayant une fonction VPN associée comme un forfait au service prépayé, **caractérisé en ce que** le procédé comprend :
A : la réception, par un module de gestion de facturation de VPN préétablissant différents niveaux de facturation de forfait VPN dans le service prépayé, d'un appel provenant d'un terminal utilisateur (S400), et le fait de déterminer s'il existe au moins un utilisateur valide de VPN dans un terminal appelant et un terminal appelé (S401, S402) et d'un niveau de facturation de forfait VPN préétabli auquel l'appel correspond (S403) ; et
B : la facturation, par un module de facturation de VPN, du terminal appelant ou du terminal appelé qui est un utilisateur valide de VPN pour l'appel en fonction du niveau de facturation de forfait VPN dont bénéficie le terminal appelant ou le terminal appelé (S404, S405, S406, S408), et la fin de cet appel si la quantité du compte de terminal utilisateur est insuffisante (S407).

2. Procédé selon la revendication 1, dans lequel l'étape B de facturation de l'appel en fonction du niveau de facturation de forfait VPN dont bénéficie le terminal appelant ou le terminal appelé comprend spécifiquement :
le fait de déterminer si l'appel correspond à un niveau de crédit gratuit préétabli (S404), dans l'affirmative, l'accumulation du frais d'appel sur le crédit gratuit (S408) ; autrement, l'accumulation du frais d'appel sur la quantité du compte de terminal utilisateur en fonction du niveau de facturation correspondant à l'appel (S405, S406).

3. Procédé selon la revendication 1 ou 2, dans lequel l'étape de détermination du fait qu'il existe au moins un utilisateur valide de VPN dans le terminal appelant ou le terminal appelé comprend :
le fait de déterminer si le numéro du terminal appelant ou du terminal appelé est celui d'un utilisateur de VPN et le fait de déterminer si une fonction VPN est activée pour le terminal appelant ou le terminal appelé (S401) ; et
si le numéro du terminal appelant ou du terminal appelé est celui d'un utilisateur de VPN et la fonction VPN est activée, le terminal appelant ou le terminal appelé est un utilisateur de VPN valide (S402).

4. Procédé selon la revendication 3, comprenant en outre : un processus d'application de l'activation de la fonction VPN avant l'étape A, le processus comprend spécifiquement :
la réception, par un module fonctionnel VPN, d'une application d'activation de la fonction VPN à partir du terminal utilisateur (S301), le fait de déterminer si le terminal utilisateur appartient au VPN (S302), dans l'affirmative, l'activation immédiate de la fonction VPN ou le retard de l'activation de la fonction VPN pour le terminal utilisateur (S303, S304, S305), autrement, la non activation de la fonction VPN pour le terminal utilisateur.

5. Procédé selon la revendication 3, comprenant en outre : si le numéro du terminal appelant ou du terminal appelé n'est pas celui d'un utilisateur de VPN (S401), ou la fonction VPN n'est pas activée (S402), ou l'appel ne correspond pas au niveau de facturation de forfait VPN préétabli (S403), le fait de déterminer si le terminal appelant ou le terminal appelé bénéficie du niveau de facturation prépayée, et l'exécution de la facturation en fonction du niveau de facturation prépayée si le terminal appelant ou le terminal appelé bénéficie du niveau de facturation prépayée (S409).

6. Procédé de facturation selon la revendication 1, comprenant en outre un processus d'enregistrement VPN avant l'étape A, le processus comprend spécifiquement :
la réception, par le module fonctionnel VPN, d'une demande d'enregistrement VPN à partir du terminal utilisateur (S301) et la détermination de l'autorité VPN pour le terminal utilisateur (S302, S303, S304, S305).

7. Système de facturation pour réaliser une facturation de réseau privé virtuel VPN dans un service prépayé, ayant une fonction VPN associée comme un forfait au service prépayé, **caractérisé en ce que** le système comprend :
un module de gestion de facturation de VPN (102) agencé pour préétablir différents niveaux de facturation de forfait VPN dans le service prépayé, recevoir un appel à partir d'un terminal utilisateur, et déterminer s'il existe au moins un utilisateur valide de VPN dans un terminal appelant et un terminal appelé et déterminer un niveau de facturation de forfait VPN préétabli auquel l'appel correspond ; et
un module de facturation de VPN (105) agencé pour facturer le terminal appelant ou le terminal appelé qui est un utilisateur valide de VPN pour l'appel en fonction du niveau de facturation dont bénéficie le terminal appelant ou le terminal appelé et terminer l'appel quand la quantité du compte de terminal utilisateur est insuffisante.

8. Système selon la revendication 7, dans lequel le module de gestion de facturation de VPN (102) est agencé en outre pour déterminer si le numéro du terminal appelant ou du terminal appelé est celui d'un utilisateur de VPN, déterminer si une fonction VPN est activée pour le terminal appelant ou le terminal appelé, et déterminer que le terminal appelant ou du terminal appelé est un utilisateur valide de VPN si le numéro du terminal appelant ou du terminal appelé est celui de l'utilisateur de VPN et la fonction VPN est activée.

9. Système selon la revendication 7, dans lequel le module de facturation de VPN (105) est agencé en outre pour accumuler le frais d'appel sur un crédit gratuit si l'appel correspond à un niveau de crédit gratuit préétabli et accumuler le frais d'appel sur la quantité du compte de terminal utilisateur si l'appel correspond à un niveau de paiement.

10. Système selon la revendication 7, comprenant en outre : un module fonctionnel VPN (103) agencé pour recevoir une application d'activation de la fonction VPN à partir du terminal utilisateur, déterminer si le terminal utilisateur appartient au VPN, et activer immédiatement la fonction VPN ou retarder l'activation de la fonction VPN pour le terminal utilisateur si le terminal utilisateur appartient au VPN ;
le module fonctionnel VPN (103) est agencé en outre pour recevoir une demande d'enregistrement VPN à partir du terminal utilisateur et déterminer l'autorité VPN pour le terminal utilisateur.

11. Système selon la revendication 7, comprenant en outre : un module de synchronisation de point de commande de service (104) agencé pour synchroniser une opération d'un point de gestion de services sur chaque point de commande de service.
